# EUROPEAN PATENT APPLICATION

(11) **EP 3 048 796 A1**
(43) Date of publication of application: **27.07.2016**
(21) Application number: 14846531.3
(22) Date of filing: 24.06.2014
(51) Int. Cl.: H04N 21/25, H04N 21/254, H04N 21/2668, H04N 21/41, H04N 21/414, H04N 21/858, H04N 21/2343, H04N 21/43, H04N 21/435, H04N 21/4402, H04N 21/462, H04N 21/81, H04N 21/8352, H04N 21/643, H04N 21/61, H04N 21/222, H04N 21/235, H04N 21/237, H04N 21/258

(54) **INFORMATION SYSTEM, INFORMATION DELIVERY METHOD AND IPTV SYSTEM BASED ON MULTI-SCREEN INTERACTION**

(30) Priority: 22.09.2013 CN 201310438187
(71) Applicant: ZTE Corporation, Guangdong Province 518057 (CN)
(72) Inventor: ZHANG, Pengzhao, Shenzhen Guangdong Province 518057 (CN); YU, Moushan, Shenzhen Guangdong Province 518057 (CN)
(74) Representative: Novagraaf Technologies
(86) International application number: PCT/CN2014/080656
(87) International publication number: WO 2015/039477

(57) **Abstract**

Provided are an information system, information delivery method and Internet Protocol Television (IPTV) system based on multi-screen interaction. The information system includes: a service interface machine component, configured to receive an information request transmitted by an IPTV system and transmit the information request to a service processing machine component, and configured to transmit a processing result returned by the service processing machine component to the IPTV system, wherein the information request carries a content identifier of a to-be-played multimedia content and a media play type of the to-be-played multimedia content; the service processing machine component configured to search, according to the information request, for an identifier of an information file which is to be delivered to the to-be-played multimedia content and has a media play type consistent or compatible with the media play type of the to-be-played multimedia content, and return the found identifier as the processing result to the service interface machine component. The solution is beneficial to cost reduction on one hand, and facilitates unified management of merchants and operators on the other hand.

## Description

### Technical Field

The present disclosure relates to the field of communications, particularly to an information system and an information delivery method based on multi-screen interaction, and an Internet Protocol Television (IPTV) system.

### Background

Multi-screen interaction refers to the conduction of a series of operations, including transmission, analysis, display, control and so on, to a multimedia content (audio, video or image) among different multimedia terminals, such as different common intelligent terminal devices (for example, a mobile phone, a PAD and a TV) based on different operating systems including iPhone Operating System (iOS), Android, Symbian and so on, by means of Wireless Fidelity (WiFi) network connections on the basis of Digital Living Network Alliance (DLNA) protocols, information gathering and retrieval system protocols, Miracast protocol protocols and so on. The content may be shared and displayed on devices of different platforms simultaneously, thus enriching users' multimedia life. In brief, screens of a number of devices may be interconnected and switched by using a dedicated connection device. For example, a movie on a mobile phone can be played on a TV, an image on a tablet computer can be shared on the TV, and a content of a computer can be projected on the TV.

Generally, multi-screens refer to computer screens, TV screens and mobile phone screens (including various PAD screens). In multi-screens, a computer screen, which is an information device terminal frequently used by every person in study and work, has a main feature that there is an extremely large amount of content information and a massive amount of information and efficient processing capability can be provided to a user. A Personal Computer (PC) can be defined as a terminal that is located within 1 meter to a user and provides highly intelligent information experience. The core appeal for the user to use the PC to acquire information is portal and comprehensive information experience. In multi-screens, a TV screen, which is an information terminal device used most frequently by every person in entertainment, has main features including simple and convenient operations of a remote control, and audio and visual enjoyment with high image quality, so that rich audio and video programs can be provided to the user. A TV can be defined as a terminal that is located within 10/3 meters to a user and provides video experience with high quality. The core appeal for the user to use the TV to acquire information is high quality entertainment experience shared with families. In multi-screens, a mobile phone screen, which is an information device terminal for everyone's communication, study and entertainment, has main features of individuation and short time of attention on the screen, thus individualized information and entertainment contents may be provided to a user. A mobile phone can be defined as a terminal that is located within a distance of 1/3 meter to a user and provides individualized information experience. The core appeal for the user to use the mobile phone is to acquire entertainment experience based on individualized, quick, interesting and peculiar information.

In an era of a full-service operation, the key for a telecommunications operator to win in the competition is the capability to provide convergent and differential services that are different from those provided by other operators. Especially, the operator should focus on the improvement of user experience and converge a plurality of service modes, networks and terminals to implement comprehensive information services and cope with competition from various aspects. IPTV services, typically, are video and audio entertainment services provided by an operator to family users based on a broadband network in an era of fixed network operation, mainly providing video and audio entertainment enjoyment on a TV terminal for the family users in a living room. With the advent of a full-service era, an IPTV is developing towards a direction of convergence. Taking the existing audio and video contents provided nowadays as an example, in addition to providing an entertainment program to a user in a living room, the IPTV will also provide video and audio contents to a user in a mobile state or in a working state through interaction between a broadband network and a mobile network, thus creating true multi-screen convergent services. A multi-screen advertising service is an extremely important service among the multi-screen convergent services. For most existing multi-screen advertising services, one advertising platform is constructed separately for each type of screens, which is not beneficial for reduction of cost on one hand, and brings inconvenience for unified management of delivery on multiple screens on the other hand, such as management operations including unified addition, deletion, modification, statistics collection and so on of a multi-screen advertisement by a merchant.

Besides services of advertisement delivery, other services related to information push or delivery also face problems concerning cost and management due to decentralized service platforms in a practical operation process of multiple screens. However, a corresponding solution has not yet been provided in the related technology to overcome the difficulties in cost reduction and/or unified management caused by the decentralized service platforms in the multi-screen technology.

### Summary

Aiming at the difficulties in cost reduction and/or unified management caused by the decentralized service platforms in the multi-screen technology in the related technology, the embodiments of the present disclosure provide an information system and an information delivery method based on multi-screen interaction, and an IPTV system, so as to at least solve the problem above.

An information system based on multi-screen interaction is provided according to an aspect of the embodiments of the present disclosure, including:
a service interface machine component, configured to receive an information request transmitted by an IPTV system and transmit the information request to a service processing machine component, and configured to transmit a processing result returned by the service processing machine component to the IPTV system, wherein the information request carries a content identifier of a to-be-played multimedia content and a media play type of the to-be-played multimedia content; and
the service processing machine component configured to search, according to the information request, for an identifier of an information file which is to be delivered to the to-be-played multimedia content and has a media play type consistent or compatible with the media play type of the to-be-played multimedia content, and return the found identifier as the processing result to the service interface machine component.

In an example embodiment, the system may further include:
a synchronization interface machine component, configured to transmit an information file synchronization message to the IPTV system, wherein the information file synchronization message carries an identifier of a to-be-synchronized information file, a media play type of the to-be-synchronized information file and an address of a server where the to-be-synchronized information file locates.

In an example embodiment, the system may further include:
a content synchronization component, configured receive multimedia content information from the IPTV system, wherein the multimedia content information includes: a content identifier of a multimedia content, a content name of the multimedia content and a media play type of the multimedia content.

In an example embodiment, the system may further include:
a merchant portal component, configured to receive an information delivery relationship between an identifier of an information file and a content identifier of a multimedia content to which the information file needs to be delivered, and transmit the information delivery relationship to a management portal component; and
the management portal component, configured to review the information delivery relationship, and transmit to the IPTV system, in a case that the information delivery relationship is approved and it is the first time that an information file needs to be delivered to the multimedia content, the content identifier of the multimedia content to which the information file needs to be delivered.

In an example embodiment, the merchant portal component may be configured to determine an information file currently selected by a client, and select, from multimedia content information received by a content synchronization component, multimedia content information having a media play type consistent or compatible with a media play type of the information file selected currently, and display the selected multimedia content information, record an information delivery relationship between an identifier of the information file selected currently and a content identifier of a multimedia content which is selected from the displayed multimedia content information by the client and to which the information file needs to be delivered, and transmit the information delivery relationship to the management portal component.

An IPTV system is further provided according to another aspect of the embodiments of the present disclosure, including:
an information requesting component, configured to transmit an information request to an information system based on multi-screen interaction, wherein the information request carries a content identifier of a to-be-played multimedia content and a media play type of the to-be-played multimedia content;
a first receiving component, configured to receive an identifier returned by the information system, the identifier returned is the identifier of an information file which is to be delivered to the to-be-played multimedia content and has a media play type consistent or compatible with the media play type of the to-be-played multimedia content; and
a displaying component configured to display the information file according to the identifier received by the first receiving component.

In an example embodiment, the system may further include:
a second receiving component, configured to receive an information file synchronization message from the information system, wherein the information file synchronization message carries an identifier of a to-be-synchronized information file, a media play type of the to-be-synchronized information file and an address of a server where the to-be-synchronized information file locates, and
a downloading component, configured to download the to-be-synchronized information file according to the information file synchronization message and return an executing result to the information system.

In an example embodiment, the displaying component may be configured to search, according to the identifier received by the first receiving component, for the corresponding information file in information files downloaded by the downloading component and display the found information file.

In an example embodiment, the system may further include:
a transmitting component, configured to transmit multimedia content information of a multimedia content in the IPTV system to the information system, wherein the multimedia content information includes: a content identifier of a multimedia content, a content name of the multimedia content and a media play type of the multimedia content.

In an example embodiment, the IPTV system may further include: a third receiving component configured to receive, from the information system, a content identifier of a multimedia content to which an information file needs to be delivered; and the information requesting component is configured to transmit, in a case that it is determined that the content identifier of the to-be-played multimedia content is the content identifier of the multimedia content to which the information file needs to be delivered, the information request to the information system.

An information delivery method based on multi-screen interaction is provided according to still another aspect of the embodiments of the present disclosure, including that:
an information request transmitted by an IPTV is received, wherein the information request carries a content identifier of a to-be-played multimedia content and a media play type of the to-be-played multimedia content; and
an identifier of an information file which is to be delivered to the to-be-played multimedia content and has a media play type consistent or compatible with the media play type of the to-be-played multimedia content is searched according to the information request, and the found identifier is transmitted to the IPTV system; and
the IPTV system displays the information file according to the received identifier.

In an example embodiment, the method may further include that:
an information file synchronization message is transmitted to the IPTV system, wherein the information file synchronization message carries an identifier of a to-be-synchronized information file, a media play type of the to-be-synchronized information file and an address of a server where the to-be-synchronized information file locates; and
the IPTV system downloads the to-be-synchronized information file according to the information file synchronization message.

In an example embodiment, the IPTV system displaying the information file according to the received identifier may include that:
the IPTV system searches for the corresponding information file from downloaded information files according to the received identifier, and displays the found information file.

In an example embodiment, before the information request transmitted by the IPTV system is received, the method may further include that:
an information delivery relationship between an identifier of an information file and a content identifier of a multimedia content to which the information file needs to be delivered is received, the information delivery relationship is reviewed, and the content identifier of the multimedia content to which the information file needs to be delivered is transmitted to the IPTV system in a case that the information delivery relationship is approved and it is the first time that an information file needs to be delivered to the multimedia content; and
the IPTV system transmits the information request when determining that the content identifier of the to-be-played multimedia content is the content identifier of the multimedia content to which the information file needs to be delivered.

By means of the embodiments of the present disclosure, in a case that an information request transmitted by an IPTV system is received, an identifier of a corresponding information file that needs to be delivered may be found according to a content identifier and a media play type of a to-be-played multimedia content in the information request, and returned to the TPTV system so that the IPTV system can display a content of the corresponding information file. By means of the solution, the unified system is able to respond to information requests of various screens, and select, according to a media play type of a multimedia content to be played currently, an appropriate information content to be delivered, thus implementing a unified information platform, which is beneficial to cost reduction on one hand, and facilitates unified management of merchants and operators on the other hand.

### Brief Description of the Drawings

The accompanying drawings described herein are used for providing further understanding to the present disclosure and form a part of the present application. The schematic embodiments of the present disclosure and description thereof are used for explaining the present disclosure, instead of constituting improper limitation to the present disclosure. In the accompanying drawings:
Fig. 1 is a structural block diagram of an information system based on multi-screen interaction and a connection relationship thereof with an IPTV system according to an embodiment of the present disclosure;
Fig. 2 is a first example structural block diagram of an information system based on multi-screen interaction and a connection relationship thereof with an IPTV system according to an embodiment of the present disclosure;
Fig. 3 is a second example structural block diagram of an information system based on multi-screen interaction and a connection relationship thereof with an IPTV system according to an embodiment of the present disclosure;
Fig. 4 is a third example structural block diagram of an information system based on multi-screen interaction and a connection relationship thereof with an IPTV system according to an embodiment of the present disclosure;
Fig. 5 is a structural block diagram of an IPTV system and a connection relationship thereof with an information system thereof based on multi-screen interaction according to an embodiment of the present disclosure;
Fig. 6 is a first example structural block diagram of an IPTV system and a connection relationship thereof with an information system thereof based on multi-screen interaction according to an embodiment of the present disclosure;
Fig. 7 is a second example structural block diagram of an IPTV system and a connection relationship thereof with an information system thereof based on multi-screen interaction according to an embodiment of the present disclosure;
Fig. 8 is a third example structural block diagram of an IPTV system and a connection relationship thereof with an information system thereof based on multi-screen interaction according to an embodiment of the present disclosure;
Fig. 9 is a structural block diagram of an advertising system based on multi-screen interaction according to an embodiment of the present disclosure;
Fig. 10 is a flowchart of an information delivery method based on multi-screen interaction according to an embodiment of the present disclosure;
Fig. 11 is a flowchart of synchronization of an IPTV video content according to an embodiment of the present disclosure;
Fig. 12 is a flowchart of synchronization of an advertising content according to an embodiment of the present disclosure;
Fig. 13 is a flowchart of addition of an advertisement according to an embodiment of the present disclosure; and
Fig. 14 is a flowchart of acquisition of an advertisement according to an embodiment of the present disclosure.

### Detailed Description of the Embodiments

The present disclosure will be expounded hereinafter with reference to the accompanying drawings and embodiments. It needs to be noted that the embodiments in the present application and the characteristics in the embodiments may be combined with each other if there is no conflict.

In the related technology, services related to information push or delivery often face problems including cost and management due to decentralized service platforms. Therefore, an embodiment of the present disclosure provides a unified information platform, i.e. an information system based on multi-screen interaction, which can respond to information requests of various screens and provide corresponding information contents, so as to overcome the difficulties in cost reduction and/or unified management caused by the decentralized service platforms in the multi-screen technology in the related technology.

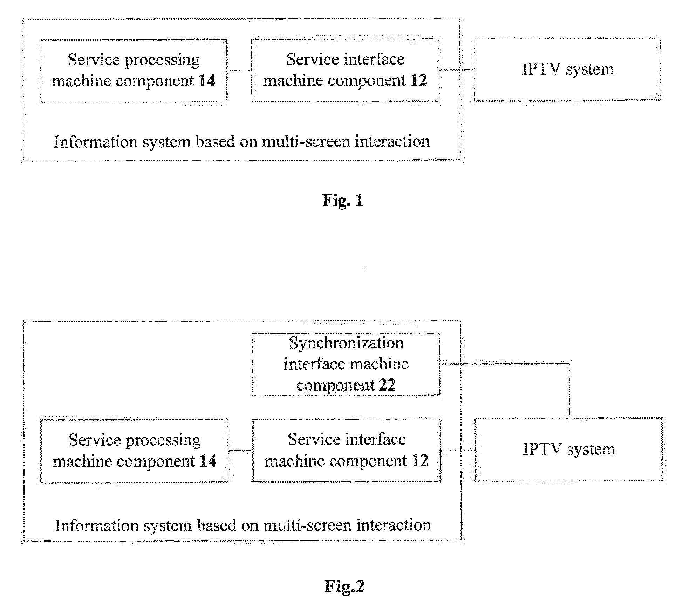

Fig. 1 is a structural block diagram of an information system based on multi-screen interaction and a connection relationship thereof with an IPTV system according to an embodiment of the present disclosure. As shown in Fig. 1, the information system includes:
a service interface machine component 12, configured to receive an information request transmitted by an IPTV system and transmit the information request to a service processing machine component, and configured to transmit a processing result returned by the service processing machine component to the IPTV system, wherein the information request carries a content identifier of a to-be-played multimedia content and a media play type of the to-be-played multimedia content; and
the service processing machine component 14, coupled to the service interface machine component 12 and configured to search, according to the information request, for an identifier of an information file which is to be delivered to the to-be-played multimedia content and has a media play type consistent or compatible with the media play type of the to-be-played multimedia content, and return the found identifier as the processing result to the service interface machine component.

By means of the system, in a case that the information request transmitted by the IPTV system is received, the identifier of the corresponding information file that needs to be delivered may be found according to the content identifier and the media play type of the to-be-played multimedia content in the information request, and returned to the TPTV system so that the IPTV system can display a content of the corresponding information file. By means of the solution, the unified system is able to respond to information requests of various screens, and select, according to a media play type of a multimedia content to be played currently, an appropriate information content to be delivered, thus implementing a unified information platform, which is beneficial to cost reduction on one hand, and facilitates unified management of merchants and operators on the other hand.

Fig. 2 is a first example structural block diagram of an information system based on multi-screen interaction and a connection relationship thereof with an IPTV system according to an embodiment of the present disclosure. As shown in Fig. 2, as an example embodiment, a synchronization interface machine component 22 may be further provided in the information system, and is configured to transmit an information file synchronization message to the IPTV system, wherein the information file synchronization message carries an identifier of a to-be-synchronized information file, a media play type of the to-be-synchronized information file and an address of a server where the to-be-synchronized information file locates. By means of the structure in this example embodiment, information files of various media play types, which are provided by a merchant, may be synchronized to the IPTV system in a unified manner, and may be synchronized by means of transmitting storage addresses of the information files to the IPTV system, thus the IPTV system may download the information files on its own.

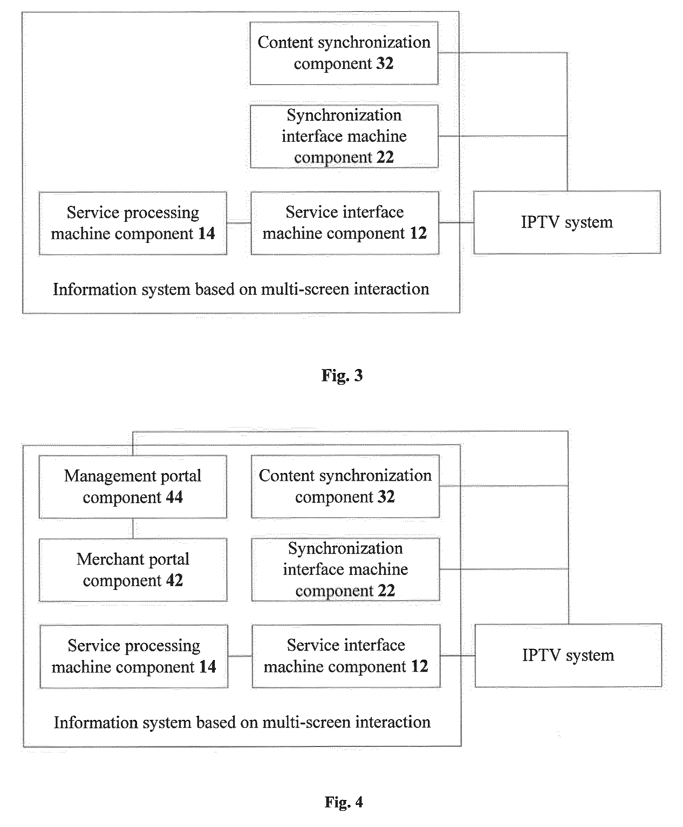

Fig. 3 is a second example structural block diagram of an information system based on multi-screen interaction and a connection relationship thereof with an IPTV system according to an embodiment of the present disclosure. As shown in Fig. 3, as an example embodiment, a content synchronization component 32 may be further provided in the information system, and is configured to configured receive multimedia content information from the IPTV system, wherein the multimedia content information includes: a content identifier of a multimedia content, a content name of the multimedia content and a media play type of the multimedia content. By means of the structure, the information system may acquire related information of the multimedia contents in the IPTV system.

Fig. 4 is a third example structural block diagram of an information system based on multi-screen interaction and a connection relationship thereof with an IPTV system according to an embodiment of the present disclosure. As shown in Fig. 4, as an example embodiment, a merchant portal component 42 may be further provided in the information system, and is configured to receive an information delivery relationship between an identifier of an information file and a content identifier of a multimedia content to which the information file needs to be delivered, and transmit the information delivery relationship to a management portal component 44; and the management portal component 44, coupled to the merchant portal component 42 and configured to review the information delivery relationship, and transmit to the IPTV system, in a case that the information delivery relationship is approved and it is the first time that an information file needs to be delivered to the multimedia content, the content identifier of the multimedia content to which the information file needs to be delivered. By means of such a structure, the IPTV system may acquire a certain multimedia content or some multimedia contents to which information is delivered, so that the IPTV system can request for corresponding information content from the information system when receiving a play request/play requests of the multimedia content/multimedia contents. An identifier of a certain multimedia content may be transmitted to the IPTV system in a case that an information file needs to be delivered to the multimedia content for the first time, so as to prevent resource waste caused by repeated operations, and in a case that it is previously determined that the information file needs to be delivered to the multimedia content (regardless of whether the information file previously determined to be delivered is the information file involved in the information delivery relationship created currently), it is unnecessary to transmit an identifier again, since the identifier functions to enable the IPTV system to know those multimedia contents to which information has been delivered, and to know that information requests need to be initiated, but the amounts and contents of the information delivered to the multimedia contents may be determined by the information system based on multi-media interaction after the information requests are initiated.

In an example embodiment, the merchant portal component 42 is configured to determine an information file currently selected by a client, and select, from multimedia content information received by a content synchronization component 32, multimedia content information having a media play type consistent or compatible with a media play type of the information file selected currently, and display the selected multimedia content information, record an information delivery relationship between an identifier of the information file selected currently and a content identifier of a multimedia content which is selected from the displayed multimedia content information by the client and to which the information file needs to be delivered, and transmit the information delivery relationship to the management portal component 44. In this way, a more convenient operation of placing an order may be provided to the merchant, and the merchant can conveniently designate a multimedia content to which a certain information file needs to be delivered.

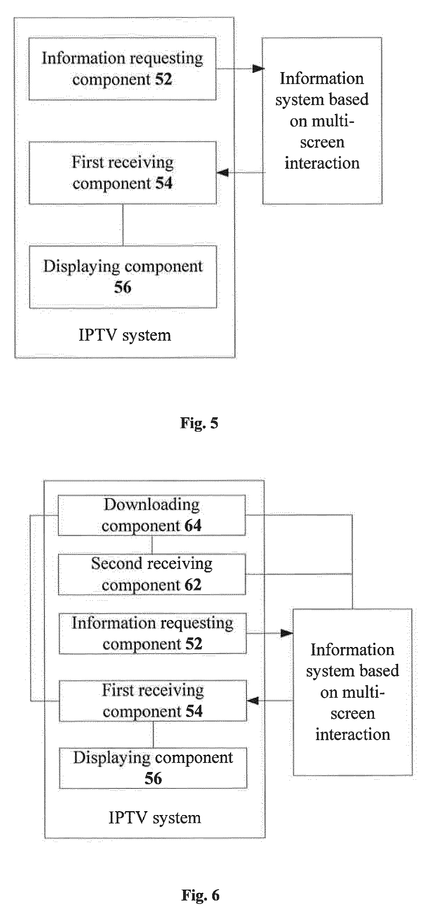

An embodiment of the present disclosure further provides an IPTV system. Fig. 5 is a structural block diagram of an IPTV system and a connection relationship thereof with an information system thereof based on multi-screen interaction according to an embodiment of the present disclosure. As shown in Fig. 5, the IPTV system includes:
an information requesting component 52, configured to transmit an information request to an information system based on multi-screen interaction, wherein the information request carries a content identifier of a to-be-played multimedia content and a media play type of the to-be-played multimedia content;
a first receiving component 54, configured to receive an identifier returned by the information system, the identifier returned is the identifier of an information file which is to be delivered to the to-be-played multimedia content and has a media play type consistent or compatible with the media play type of the to-be-played multimedia content; and
a displaying component 56, coupled to the first receiving component 54 and configured to display, according to the first receiving component 54-received identifier of the information file, the information file.

By means of the IPTV system, interaction may be performed with the unified information system, thus conveniently determining information that needs to be delivered to a multimedia content played currently and displaying the found information file. The IPTV system does not need to request various platforms for the delivered information, thus simplifying a processing flow of the IPTV system. Besides, it is also unnecessary for the IPTV system to provide interfaces connected with various platforms, thereby simplifying both hardware and software.

Fig. 6 is a first example structural block diagram of an IPTV system and a connection relationship thereof with an information system thereof based on multi-screen interaction according to an embodiment of the present disclosure. As shown in Fig. 6, as an example embodiment, a second receiving component 62 may be further provided in the IPTV system, and is configured to receive an information file synchronization message from the information system, wherein the information file synchronization message carries an identifier of a to-be-synchronized information file, a media play type of the to-be-synchronized information file and an address of a server where the to-be-synchronized information file locates, and a downloading component 64, configured to download the to-be-synchronized information file according to the information file synchronization message and return an executing result to the information system.

In an example embodiment, the displaying component 56 is configured to search, according to the first receiving component 54-received identifier of the information file, for the corresponding information file in information files downloaded by the downloading component 64, and display the found information file.

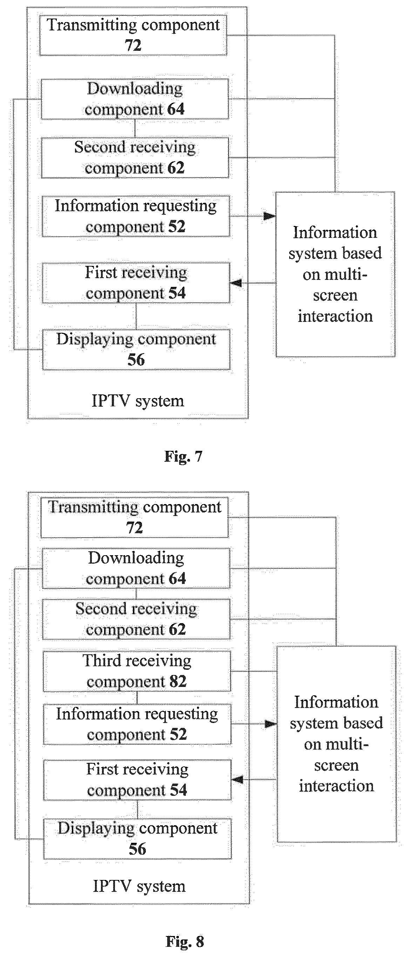

Fig. 7 is a second example structural block diagram of an IPTV system and a connection relationship thereof with an information system thereof based on multi-screen interaction according to an embodiment of the present disclosure. As shown in Fig. 7, as an example embodiment, a transmitting component 72 may be further provided in the IPTV system and is configured to transmit multimedia content information of a multimedia content in the IPTV system to the information system, wherein the multimedia content information includes: a content identifier of a multimedia content, a content name of the multimedia content and a media play type of the multimedia content.

Fig. 8 is a third example structural block diagram of an IPTV system and a connection relationship thereof with an information system thereof based on multi-screen interaction according to an embodiment of the present disclosure. As shown in Fig. 8, as an example embodiment, a third receiving component 82 may be further provided in the IPTV system, and is configured to receive, from the information system, a content identifier of a multimedia content to which an information file needs to be delivered; and the information requesting component 52 is configured to transmit, in a case that it is determined that the content identifier of the to-be-played multimedia content is the content identifier of the multimedia content to which the information file needs to be delivered, the information request to the information system.

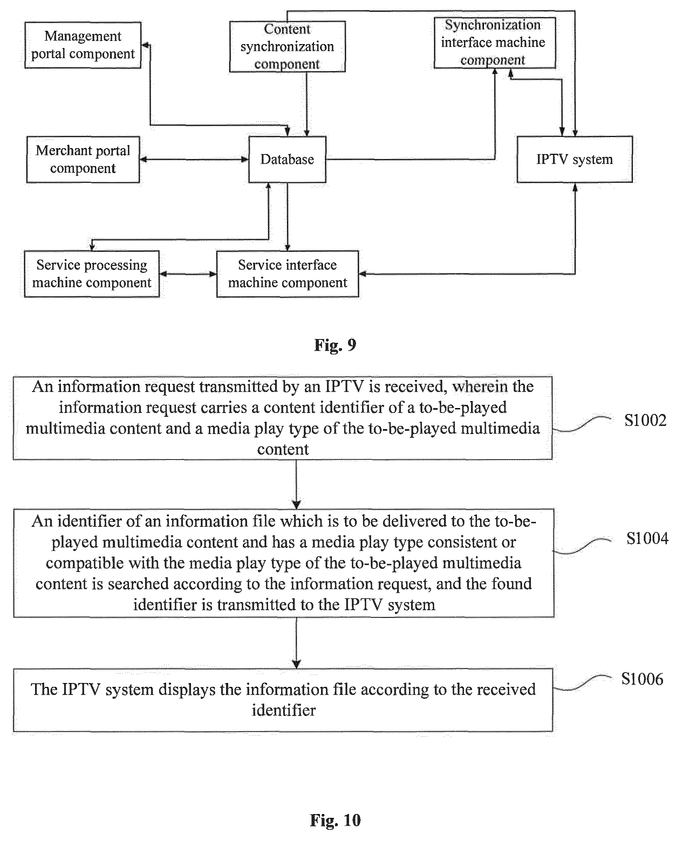

Components and functions of various parts of an information system based on multi-screen interaction will be illustrated below through a specific embodiment, and delivery of an advertisement is described as an example in the following embodiment. Those skilled in the art should understand that information of other types may be also delivered in a unified manner by the information system based on multi-screen interaction. Fig. 9 is a structural block diagram of an advertising system based on multi-screen interaction according to an embodiment of the present disclosure. As shown in Fig. 9, the advertising system based on multi-screen interaction includes a content synchronization component, a synchronization interface machine component, a service interface machine component, a service processing machine component, a management portal component, a merchant portal component and a database component,
wherein the content synchronization component is mainly responsible for synchronizing video content information of an IPTV side to the advertising system, the synchronization interface machine component is mainly responsible for synchronizing an advertising content file of the advertising system to the IPTV side, the service interface machine component is mainly responsible for receiving advertising requests corresponding to a TV screen, a computer screen and a mobile phone screen, and returning advertisements to the IPTV side so that the advertisements are further provided to various terminal devices, the service processing machine component is mainly responsible for selecting an advertisement, and transmitting the selected advertisement to the service interface machine component, the management portal is mainly responsible for adding a merchant, and reviewing an advertising content and an advertising order, the merchant portal is mainly responsible for adding an advertising content and an advertising order, and the database component is mainly responsible for storing a database.

An embodiment of the present disclosure further provides an information delivery method based on multi-screen interaction. Fig. 10 is a flowchart of an information delivery method based on multi-screen interaction according to an embodiment of the present disclosure. As shown in Fig. 10, the method includes the following steps.

Step 1002: An information request transmitted by an IPTV is received, wherein the information request carries a content identifier of a to-be-played multimedia content and a media play type of the to-be-played multimedia content.

Step 1004: An identifier of an information file which is to be delivered to the to-be-played multimedia content and has a media play type consistent or compatible with the media play type of the to-be-played multimedia content is searched according to the information request, and the found identifier is transmitted to the IPTV system.

Step 1006: The IPTV system displays the information file according to the received identifier.

By means of the method, in a case that the information request transmitted by the IPTV system is received, the identifier of the corresponding information file that needs to be delivered may be found according to the content identifier and the media play type of the to-be-played multimedia content in the information request, and returned to the TPTV system so that the IPTV system can display a content of the corresponding information file. By means of the solution, information requests of various screens may be responded in a unified manner, and an appropriate delivered information content is selected according to a media play type of a multimedia content to be played currently, thus implementing a unified information platform, which is beneficial to cost reduction on one hand, and facilitates unified management of merchants and operators on the other hand.

In an example embodiment, the information delivery method may further include that: an information file synchronization message is transmitted to the IPTV system, wherein the information file synchronization message carries an identifier of a to-be-synchronized information file, a media play type of the to-be-synchronized information file and an address of a server where the to-be-synchronized information file locates; and the IPTV system downloads the to-be-synchronized information file according to the information file synchronization message.

In an example embodiment, that the IPTV system displays the information file according to the received identifier includes that: the IPTV system finds the corresponding information file from downloaded information files according to the received identifier, and displays the same.

In an example embodiment, before the information request transmitted by the IPTV system is received, the information delivery method further includes that: an information delivery relationship between an identifier of an information file and a content identifier of a multimedia content to which the information file needs to be delivered is received, the information delivery relationship is reviewed, and the content identifier of the multimedia content to which the information file needs to be delivered is transmitted to the IPTV system in a case that the information delivery relationship is approved and it is the first time that an information file needs to be delivered to the multimedia content; and the IPTV system transmits the information request when determining that the content identifier of the to-be-played multimedia content is the content identifier of the multimedia content to which the information file needs to be delivered. In this way, an identifier of a certain multimedia content may be transmitted to the IPTV system in a case that an information file needs to be delivered to the multimedia content for the first time, so as to prevent resource waste caused by repeated operations, and in a case that it is previously determined that the information file needs to be delivered to the multimedia content (regardless of whether the information file previously determined to be delivered is the information file involved in the information delivery relationship created currently), it is unnecessary to transmit an identifier again, since the identifier functions to enable the IPTV system to know those multimedia contents to which information has been delivered, and to know that information requests need to be initiated, but the amounts and contents of the information delivered to the multimedia contents may be determined by the information system based on multi-media interaction after the information requests are initiated.

In the method, information to be delivered may be an advertisement. At the moment, the IPTV side may synchronize information of a video content to the advertising system. The information of the video content includes information related to a video content of a computer screen, a TV screen and a mobile phone screen. Distinguished according to video formats supported by various screens, the advertising system will add advertising contents according to different video formats, and synchronize advertising files to the IPTV side. The advertising system selects a video to which an advertising content needs to be delivered and records a delivery relationship. When the video content is played on different screens, the IPTV side transmits advertisement requests to the advertising system, and the advertising system feeds back corresponding advertisement identifiers to the IPTV side according to advertisement delivery relationships.

Specific processing flows of video content synchronization, advertising content synchronization, advertisement addition, and advertisement acquisition of an IPTV will be expounded below through several specific embodiments and by taking delivered information being an advertisement as an example.

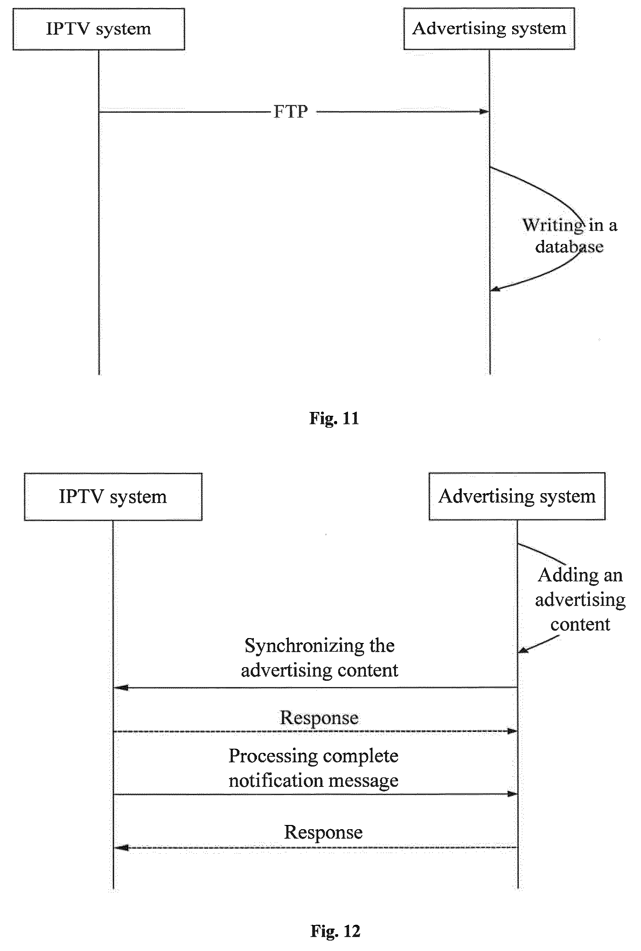

Fig. 11 is a flowchart of synchronization of an IPTV video content according to an embodiment of the present disclosure. As shown in Fig. 11, a content synchronization component downloads a content synchronization file (including a full amount synchronization file and an increment synchronization file) from an IPTV system through File Transfer Protocol (FTP), and then writes data of the content synchronization file into a database. An example of fields including a content number, a content name, a media play type and so on contained in the content synchronization file is as shown in the following Table 1.

**Table 1**

| Serial number | Field name | Obligatory | Type | Byte size | Field description |
|---|---|---|---|---|---|
| 1 | opflag | Y | Number | 10 | 1: Add |
| | | | | | 2: Delete |
| 2 | contentcode | Y | Varchar2 | 64 | Content number |
| 3 | bocode | Y | varchar2 | 64 | Service operator number |
| | | | | | Language types of multiple languages: |
| | | | | | eng-English |
| | | | | | zho-Chinese |
| 4 | langtype | Y | Varchar2 | 20 | bul-Bulgarian |
| | | | | | deu-German |
| | | | | | fra-French |
| | | | | | rus-Russian |
| | | | | | ita-Italian |
| 5 | content_name | N | Varchar2 | 1024 | Content name |
| 6 | content_type | N | Number | 10 | --Metadata type 1: VOD, 8: Karaoke, 9: Advertisement, 10: Single TV episode, 14: TV play head, 15: Album head, 16: Single album episode, 18: ippv content, 19: Archived content, 21: Boot animation, 22: Background music |
| 7 | seriesnum | N | Number | 10 | Number of episodes (if not a series of episodes, a value is 0) |
| 8 | cpcode | N | Varchar2 | 64 | Content provider number |
| 9 | telecomcod | N | Varchar2 | 128 | Telecommunications code |
| 10 | mediacode | N | Varchar2 | 128 | SMG code |
| 11 | status | N | Number | 10 | 2 Approved |
| 12 | content_head | N | Varchar2 | 1024 | Content indexing letter |
| 13 | director | N | Varchar2 | 1024 | Director names, separated by ";" |
| 14 | director_head | N | Varchar2 | 1024 | Director initials, separated by ";" |
| 15 | actor | N | Varchar2 | 1024 | Actor names, separated by ";" |
| 16 | actor_head | N | Varchar2 | 1024 | Actor initials, separated by ";" |
| 17 | description | N | Varchar2 | 2048 | Content description |
| 18 | genre | N | varchar2 | 1024 | Styles, such as a science fiction movie, an action movie and so on |
| 19 | subgenre | N | varchar2 | 1024 | Sub-style" such as a science fiction movie, an action movie and so on |
| 20 | advertise_flag | N | Number | 10 | Advertisement identifier type set: 1 :RTSP 2:HLS 4:Silverlight 8:adobe |
| 21 | mediaservices | N | number | 10 | Media play type 1-RTSP 2-HLS 4-Silverlight 8-adobe |

In the present example, mediaservices in the fields above represents a media play type, and is denoted by a number, 1 represents Real Time Streaming Protocol (RTSP), which is often used on a TV screen; 2 represents Hypertext Transfer Protocol (HTTP) Live Streaming (HLS), which is an HTTP-based streaming media transmission protocol implemented by Apple Inc., capable of implementing live broadcast and on-demand broadcast of a streaming media, and is mainly applied on an iOS to provide live broadcast and on-demand broadcast solutions of audios and videos for an iOS device (such as an iPhone or an iPad) and mainly used on an computer screen and a mobile phone screen of Apple; 4 represents Silverlight, which is a cross-browser and cross-platform plug-in that brings next generation .NET framework-based media experience and rich interactive applications for a network, provides a flexible programming model and can be conveniently integrated into an existing network application; Silverlight can rapidly deliver information of a high quality video to a mainstream browser operating on Mac or Windows at low cost and Silverlight is mainly used on a computer screen; 8 represents adobe, which refers to streaming media transmission protocols of adobe Company, including Real Time Messaging Protocol (RTMP), HTTP Dynamic Streaming and so on, is mainly used on a computer screen and a mobile phone screen. It needs to be noted that a mediaservices field synchronized by the IPTV system may be also a combination of various media play types. For example, a value of mediaservices may be 3, indicating that two protocol formats including RTSP and HLS are supported, which means that the same content is delivered to multi-screens. When such a video content is displayed on an advertising system, the advertising system will split the video content into two, i.e. an RTSP video content and an HLS video content.

Fig. 12 is a flowchart of synchronization of an advertising content according to an embodiment of the present disclosure. As shown in Fig. 12, the advertising content is added in the advertising system of the embodiment of the present disclosure first during the synchronization of the advertising content. It is necessary to select a protocol format of the content when the advertising content is added, and there are 4 protocol formats, which are RTSP, HLS, Silverlight and adobe respectively corresponding to mediaservices fields in a video content synchronized by an IPTV system, representing video formats of the video content to which the advertising content is delivered. After the advertising content is added, the advertising system will synchronize the advertising content to the IPTV system, and during the synchronization, the advertising system will put an advertising content file on FTP first, and then transmits a message to notify the IPTV system. The message carries an advertising content number, an advertising content format, a mediaservices field and an FTP address of the advertising content file. The IPTV system downloads an advertising content file locally according to the FTP address of the advertising content file. After downloading the advertising content file, the IPTV system transmits a receipt message to the advertising system to notify a processing result to the advertising system.

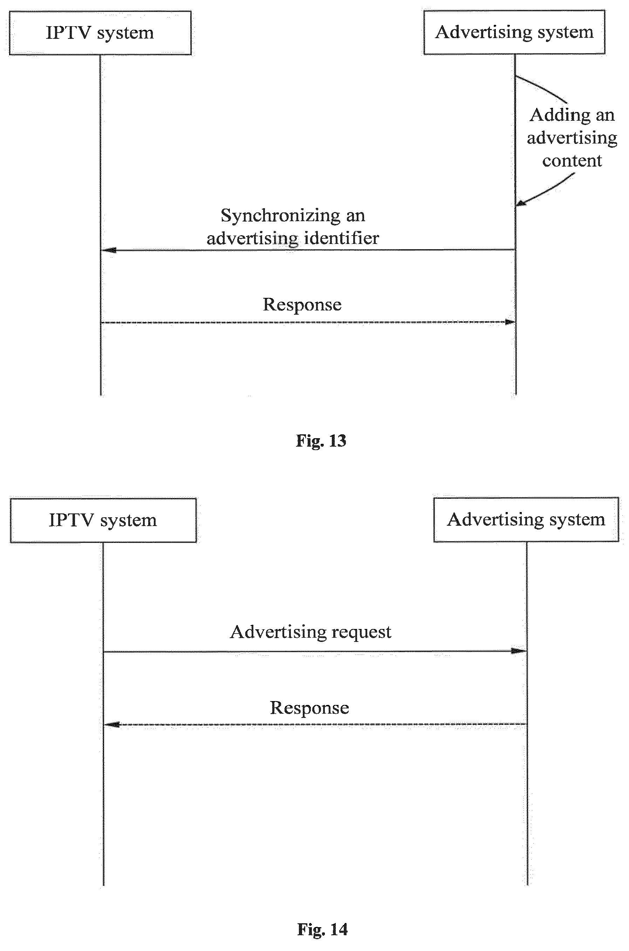

Fig. 13 is a flowchart of addition of an advertisement according to an embodiment of the present disclosure. As shown in Fig. 13, it is necessary to select an advertisement content when the advertisement is added, and then a video content to which the advertisement content needs to be delivered is selected. When the video content is selected, an advertising system will select the video content according to a format of the advertisement content. Information including a time slot in which the advertisement is played, and the number of playing times of the advertisement may be also set when the advertisement is added. The operation of adding the advertisement may be completed in the merchant portal component as shown in Fig. 9. After the advertisement is added, the advertisement may be reviewed in the management portal component as shown in Fig. 9. After the review, the advertising system will synchronize an advertisement identifier to an IPTV system, and a synchronization message carries a number and a media play type of the video content.

Fig. 14 is a flowchart of acquisition of an advertisement according to an embodiment of the present disclosure. As shown in Fig. 14, when a video content is played by a TV screen, a computer screen or a mobile phone screen, an IPTV system judges whether an advertisement is delivered in the video content, and if so, a service interface machine component of an advertising system sends an advertising request. The advertising request of the IPTV system contains a media play type (a mediaservices field) of the video content. After receiving the advertising request, a service interface machine transmits the advertising request message to a service processing machine component. The service processing machine component searches a corresponding advertisement according to a number and the mediaservices field of the video content, and transmits the acquired advertisement to the service interface machine component. The service interface machine component transmits the advertisement to the IPTV system subsequently, and a returned advertisement response message contains a number of an advertisement content. The IPTV system locally searches the advertisement content according to the number of the advertisement content and plays the advertisement.

A multi-screen interactive advertising system has been implemented based on various media play protocols in the embodiments above. Different advertising contents are added according to video formats supported by various media play protocols, and the advertising contents are synchronized to an IPTV system, the IPTV system transmits an advertising request to the advertising system when playing a video content and the advertising system returns an advertisement identifier to the IPTV system.

It may be seen from the contents described in the embodiments that the present disclosure has implemented the following technical effect.

By means of the present disclosure, in a case that an information request transmitted by an IPTV system is received, an identifier of a corresponding information file that needs to be delivered may be found according to a content identifier and a media play type of a to-be-played multimedia content in the information request, and returned to the TPTV system so that the IPTV system can display a content of the corresponding information file. By means of the solution, the unified system is able to respond to information requests of various screens, and select, according to a media play type of a multimedia content to be played currently, an appropriate information content to be delivered, thus implementing a unified information platform, which is beneficial to cost reduction on one hand, and facilitates unified management of merchants and operators on the other hand. Besides, it is unnecessary for the IPTV system side to provide interfaces connected with various platforms, thereby simplifying both hardware and software.

Obviously, it should be understood by those skilled in the art that, the above components or steps of the present disclosure may be implemented a universal computing device. They may be centralized on a single computing device or distributed on a network composed of multiple computing devices. Alternatively, they may be implemented by a program code executable by a computing device. Therefore, they may be stored in a storage device and executed by the computing device, and in same cases, the steps as illustrated or described may be executed according to sequences different from those herein, or they may be implemented by respectively fabricating them into integrated circuit components, or by fabricating a plurality of components or steps of them into a single integrated circuit component. Therefore, the present disclosure is not limited to any specific combination of hardware and software.

What are described above are only example embodiments of the present disclosure, but are not for use in limiting the present disclosure, and for those skilled in the art, there may be various modifications and changes to the present disclosure. Any modification, equivalent replacement, improvement and the like made within the principles of the present disclosure should be included in the protection scope defined by the claims of the present disclosure.

## Claims

1. An information system based on multi-screen interaction, comprising:
a service interface machine component, configured to receive an information request transmitted by an Internet Protocol Television (IPTV) system and transmit the information request to a service processing machine component, and configured to transmit a processing result returned by the service processing machine component to the IPTV system, wherein the information request carries a content identifier of a to-be-played multimedia content and a media play type of the to-be-played multimedia content; and
the service processing machine component, configured to search, according to the information request, for an identifier of an information file which is to be delivered to the to-be-played multimedia content and has a media play type consistent or compatible with the media play type of the to-be-played multimedia content, and return the found identifier as the processing result to the service interface machine component.

2. The information system based on multi-screen interaction as claimed in claim 1, further comprising:
a synchronization interface machine component, configured to transmit an information file synchronization message to the IPTV system, wherein the information file synchronization message carries an identifier of a to-be-synchronized information file, a media play type of the to-be-synchronized information file and an address of a server where the to-be-synchronized information file locates.

3. The information system based on multi-screen interaction as claimed in claim 1, further comprising:
a content synchronization component, configured receive multimedia content information from the IPTV system, wherein the multimedia content information comprises: a content identifier of a multimedia content, a content name of the multimedia content and a media play type of the multimedia content.

4. The information system based on multi-screen interaction as claimed in any one of claims 1 to 3, further comprising:
a merchant portal component, configured to receive an information delivery relationship between an identifier of an information file and a content identifier of a multimedia content to which the information file needs to be delivered, and transmit the information delivery relationship to a management portal component; and
the management portal component, configured to review the information delivery relationship, and transmit to the IPTV system, in a case that the information delivery relationship is approved and it is the first time that an information file needs to be delivered to the multimedia content, the content identifier of the multimedia content to which the information file needs to be delivered.

5. The information system based on multi-screen interaction as claimed in claim 4, wherein the merchant portal component is configured to determine an information file currently selected by a client, and select, from multimedia content information received by a content synchronization component, multimedia content information having a media play type consistent or compatible with a media play type of the information file selected currently, and display the selected multimedia content information, record an information delivery relationship between an identifier of the information file selected currently and a content identifier of a multimedia content which is selected from the displayed multimedia content information by the client and to which the information file needs to be delivered, and transmit the information delivery relationship to the management portal component.

6. An Internet Protocol Television (IPTV) system, comprising:
an information requesting component, configured to transmit an information request to an information system based on multi-screen interaction, wherein the information request carries a content identifier of a to-be-played multimedia content and a media play type of the to-be-played multimedia content;
a first receiving component, configured to receive an identifier returned by the information system, the identifier returned is the identifier of an information file which is to be delivered to the to-be-played multimedia content and has a media play type consistent or compatible with the media play type of the to-be-played multimedia content; and
a displaying component configured to display the information file according to the identifier received by the first receiving component.

7. The IPTV system as claimed in claim 6, further comprising:
a second receiving component, configured to receive an information file synchronization message from the information system, wherein the information file synchronization message carries an identifier of a to-be-synchronized information file, a media play type of the to-be-synchronized information file and an address of a server where the to-be-synchronized information file locates, and
a downloading component, configured to download the to-be-synchronized information file according to the information file synchronization message and return an executing result to the information system.

8. The IPTV system as claimed in claim 7, wherein the displaying component is configured to search, according to the identifier received by the first receiving component, for the corresponding information file in information files downloaded by the downloading component and display the found information file.

9. The IPTV system as claimed in claim 6, further comprising:
a transmitting component, configured to transmit multimedia content information of a multimedia content in the IPTV system to the information system, wherein the multimedia content information comprises: a content identifier of a multimedia content, a content name of the multimedia content and a media play type of the multimedia content.

10. The IPTV system as claimed in claim 6, wherein
the IPTV system further comprises: a third receiving component, configured to receive, from the information system, a content identifier of a multimedia content to which an information file needs to be delivered; and
the information requesting component is configured to transmit, in a case that it is determined that the content identifier of the to-be-played multimedia content is the content identifier of the multimedia content to which the information file needs to be delivered, the information request to the information system.

11. An information delivery method based on multi-screen interaction, comprising:
receiving an information request transmitted by an Internet Protocol Television (IPTV) system, wherein the information request carries a content identifier of a to-be-played multimedia content and a media play type of the to-be-played multimedia content; and
searching, according to the information request, for an identifier of an information file which is to be delivered to the to-be-played multimedia content and has a media play type consistent or compatible with the media play type of the to-be-played multimedia content, and transmitting the found identifier to the IPTV system; and
displaying, by the IPTV system, the information file according to the received identifier.

12. The information delivery method based on multi-screen interaction as claimed in claim 11, further comprising:
transmitting an information file synchronization message to the IPTV system, wherein the information file synchronization message carries an identifier of a to-be-synchronized information file, a media play type of the to-be-synchronized information file and an address of a server where the to-be-synchronized information file locates; and
downloading, by the IPTV system, the to-be-synchronized information file according to the information file synchronization message.

13. The information delivery method based on multi-screen interaction as claimed in claim 12, wherein displaying, by the IPTV system, the information file according to the received identifier comprises:
searching for the corresponding information file from downloaded information files according to the received identifier, and displaying the found information file, by the IPTV system.

14. The information delivery method based on multi-screen interaction as claimed in claim 11, wherein before receiving the information request transmitted by the IPTV system, the information delivery method based on multi-screen interaction further comprises:
receiving an information delivery relationship between an identifier of an information file and a content identifier of a multimedia content to which the information file needs to be delivered, reviewing the information delivery relationship, and transmitting to the IPTV system, in a case that the information delivery relationship is approved and it is the first time that an information file needs to be delivered to the multimedia content, the content identifier of the multimedia content to which the information file needs to be delivered; and
transmitting, by the IPTV system, the information request when determining that the content identifier of the to-be-played multimedia content is the content identifier of the multimedia content to which the information file needs to be delivered.
